# EUROPÄISCHE PATENTANMELDUNG

(11) **EP 1 227 433 A2**
(43) Veröffentlichungstag der Anmeldung: **31.07.2002**
(21) Anmeldenummer: 02001751.3
(22) Anmeldetag: 25.01.2002
(51) Int. Cl.: G06K 11/18

(54) **Steuerungseinrichtung**

(30) Priorität: 30.01.2001 DE 10103888
(71) Anmelder: Gerolymos, Eleftherios, 70178 Stuttgart (DE); Bellendorf, Paul, 91074 Herzogenaurach (DE)
(72) Erfinder: Gerolymos, Eleftherios, 70178 Stuttgart (DE); Bellendorf, Paul, 91074 Herzogenaurach (DE)
(74) Vertreter: Matschkur, Lindner Blaumeier Patent- und Rechtsanwälte

(57) **Zusammenfassung**

Steuerungseinrichtung zum Ausgeben von Steuersignalen an einen Empfänger, insbesondere einen Computer, umfassend einen Halteabschnitt zum Befestigen der Steuerungseinrichtung an einem Finger, mit einem an dem Halteabschnitt angeordneten Gehäuse, an dem ein mittels eines anderen Fingers bewegbarer Bewegungsaufnehmer vorgesehen ist, sowie mit einem mittels eines Fingers betätigbaren Schaltelement, wobei in Abhängigkeit der Bewegung des Bewegungsaufnehmers und der Betätigung des Schaltelements Steuersignale erzeugt und über eine Signalübertragungseinrichtung ausgegeben werden, wobei der Bewegungsaufnehmer und das wenigstens eine am Gehäuse oder dem Halteabschnitt angeordnete Schaltelement derart versetzt zueinander angeordnet sind, dass der Bewegungsaufnehmer mit dem Daumen und das Schaltelement mit einem dem Finger, auf den die Steuerungseinrichtung aufgesteckt ist, benachbarten Finger betätigbar ist.

## Beschreibung

Die Erfindung betrifft eine Steuerungseinrichtung zum Ausgeben von Steuersignalen an einen Empfänger, insbesondere einen Computer, umfassend einen Halteabschnitt zum Befestigen der Steuerungseinrichtung an einem Finger, mit einem an dem Halteabschnitt angeordneten Gehäuse, an dem ein mittels eines anderen Fingers bewegbarer Bewegungsaufnehmer vorgesehen ist, sowie mit einem mittels eines Fingers betätigbaren Schaltelement, wobei in Abhängigkeit der Bewegung des Bewegungsaufnehmers und der Betätigung des Schaltelements Steuersignale erzeugt und über eine Signalübertragungseinrichtung ausgegeben werden.

Eine solche Steuerungseinrichtung ist aus EP 0 539 599 A1 bekannt. Sie umfasst einen Halteabschnitt in Form eines seitlich offenen Ringabschnitts, mittels dem die Steuerungseinrichtung auf den Zeigefinger aufgesteckt werden kann. An der Halteeinrichtung ist ein Gehäuse angeordnet, an dem ein Bewegungsaufnehmer sowie im in EP 0 539 599 A1 gezeigten Beispiel zwei Schaltelemente mittels eines anderen Fingers betätigbar angeordnet sind. Die Steuerungseinrichtung ist so am Zeigefinger zu befestigen, dass das Gehäuse seitlich vom Finger absteht und der Bewegungsaufnehmer sowie die Schaltelemente mittels des Daumens betätigt werden können. Über den Bewegungsaufnehmer ist es möglich, einen Cursor am Monitor eines Computers bewegen zu können, die Schaltelemente können in ihrer Funktion seitens der computerseitig vorhandenen Software belegt werden. Über eine im Gehäuse integrierte Elektronik wird zum einen die Bewegung des Bewegungsaufnehmers erfasst sowie die Betätigung des oder der Schaltelemente, wobei in Abhängigkeit der Betätigung entsprechende Steuersignale ausgegeben werden, die dann über eine drahtlose Kommunikationsverbindung an den computerseitigen Empfänger weitergegeben werden.

Die Konfiguration der vorbekannten Steuerungseinrichtung ist derart, dass am Gehäuse mittig der Bewegungsaufnehmer angeordnet ist, links und rechts davon sind die beiden Schaltelemente quasi auf der Längsachse des länglichen Gehäuse positioniert. Der Benutzer kann nun während des Schreibens den Bewegungsaufnehmer betätigen oder aber das eine oder andere Schaltelement, ohne dass er hierfür eine separate Steuerungseinrichtung, in der Regel eine Maus greifen und bewegen muss. Nachteilig bei der vorbekannten Ausführungsform ist jedoch, dass aufgrund der Anordnung des Bewegungsaufnehmers sowie der Schaltelemente jeweils nur eines dieser Teile betätigt werden kann. Das heißt, es kann beispielsweise nur der Bewegungsaufnehmer zum Steuern des Cursors betätigt werden. Soll nun beispielsweise beim Schreiben eines Textes durch Verschieben des Cursors die Schreibmarke an der Cursorstelle platziert werden, muss der Daumen vom Bewegungsaufnehmer entfernt und mit ihm eines der Schaltelemente betätigt werden. Soll nun der Cursor erneut verschoben werden, muss man wieder umgreifen usw. Dies ist relativ umständlich. Ein gravierender Nachteil besteht ferner darin, dass eine gleichzeitige Betätigung des Bewegungsaufnehmers wie eines Schaltelements nicht möglich ist, was aber zum Markieren eines Textes oder dergleichen mitunter erforderlich ist. Hierfür muss der Benutzer, wenn er die vorbekannte Steuerungseinrichtung verwendet, zwangsläufig auf die Tastatur zurückgreifen.

Der Erfindung liegt damit das Problem zugrunde, eine Steuerungseinrichtung anzugeben, die vielseitiger verwendbar ist.

Zur Lösung dieses Problems ist bei einer Steuerungseinrichtung der eingangs genannten Art erfindungsgemäß vorgesehen, dass der Bewegungsaufnehmer und das wenigstens eine am Gehäuse oder dem Halteabschnitt angeordnete Schaltelement derart versetzt zueinander angeordnet sind, dass der Bewegungsaufnehmer mit dem Daumen und das Schaltelement mit einem dem Finger, auf dem die Steuerungseinrichtung aufgesteckt ist, benachbarten Finger betätigbar ist.

Aufgrund der erfindungsgemäß vorgesehenen Positionierung des Bewegungsaufnehmers und des Schaltelements ist es mit besonderem Vorteil möglich, beide gleichzeitig zu betätigen. Ist die Steuerungseinrichtung beispielsweise auf den Zeigefinger aufgesteckt, so kann der Bewegungsaufnehmer mit dem Daumen und das Schaltelement, das nach rechts versetzt bezüglich des Bewegungsaufnehmers angeordnet ist, mit dem Mittelfinger betätigt werden. Auf diese Weise ist es problemlos möglich, das Schaltelement auch während der Bewegung des Bewegungsaufnehmers zu drücken, was die Einsetzbarkeit der erfindungsgemäßen Steuerung wesentlich flexibler macht.

Nach einer ersten Erfindungsausgestaltung kann der Bewegungsaufnehmer an einem unteren Gehäuseabschnitt und das wenigstens eine Schaltelement an einem seitlichen Gehäuseabschnitt oder einem seitlichen Abschnitt des Halteabschnitts um vorzugsweise ca. 90° versetzt angeordnet sein. Dabei können an zwei einander gegenüberliegenden seitlichen Gehäuseabschnitten oder Abschnitten des Halteabschnitts jeweils mindestens ein Schaltelement angeordnet sein. Diese Ausgestaltungen ermöglichen einen multifunktionalen Betrieb. Wird eine solche Steuerungseinrichtung z. B. auf den Mittelfinger gesteckt, so kann der Bewegungsaufnehmer, der am unteren Gehäuseabschnitt, der im Handinneren liegt, mittels des Daumens betätigt werden, die beiden seitlichen Schaltelemente können in beliebiger Abfolge mit dem Zeige- oder dem Ringfinger betätigt werden.

Die Ausführungsform mit einem Bewegungsaufnehmer und den wenigstens zwei Schaltelementen ersetzt die herkömmliche Steuerungsmaus, mit der erfindungsgemäßen Steuerungseinrichtung können allein durch die Betätigung der Elemente mit den Fingern sämtliche Steuerungsbefehle wie bei einer bekannten Maus erzeugt und gegeben werden, ohne dass man die Hand von der Tastatur nehmen muss. Damit ist ein wesentlich angenehmeres und schnelleres Arbeiten möglich.

Eine Erfindungsalternative sieht demgegenüber vor, dass der Bewegungsaufnehmer an einem seitlichen Gehäuseabschnitt und das mindestens eine Schaltelement an einem gegenüberliegenden seitlichen Gehäuseabschnitt oder Abschnitt des Halteabschnitts angeordnet ist. Diese Ausführungsform ist insbesondere für eine am Zeigefinger zu befestigende Steuerungseinrichtung zweckmäßig. Der seitliche Bewegungsaufnehmer wird über den Daumen betätigt, das an der gegenüberliegenden Seite befindliche Schaltelement mit dem Mittelfinger.

Der Bewegungsaufnehmer kann erfindungsgemäß als Trackball, als Joystick, als Touchpad, als Minikamera oder als eine optische Einrichtung, über die eine Unterlage unter der Steuerungseinrichtung in Form einzelner Bilder aufgenommen und durch Analyse der Bilder die Bewegung ermittelt wird, ausgebildet sein. Der Trackball, der Joystick oder ein Touchpad werden mit dem Daumen direkt betätigt, die Minikamera erfasst die Daumenbewegung, das heißt, der Daumen ist vor der Kamera hin und her zu bewegen, wobei die integrierte Elektronik die entsprechende Bewegung erfasst und in Steuersignale umsetzt. Die optische Einrichtung umfasst ebenfalls eine Kamera, mit der gegebenenfalls unter Verwendung einer vorgesehenen kleinen Lichtquelle Bilder von der Unterlage unter der Steuerungseinrichtung aufgenommen werde, die bezüglich einer Bewegung unter Verwendung geeigneter Analysealgorithmen analysiert werden. Als Unterlage kann zB. eine Tischplatte, gegebenenfalls auch die Tastatur aufgenommen werden. Zusätzlich kann erfindungsgemäß eine gehäuseseitig und benachbart zum Bewegungsaufnehmer angeordnete, mit dem Daumen betätigbare Einrichtung zum Scrollen einer Monitorseite vorgesehen sein. Diese Einrichtung kann zwei mit unterschiedlichen Bewegungsrichtungsinformationen belegbare Tasten, einen Schiebeschalter, ein Drehrad oder eine Drehwalze umfassen.

Weiterhin ist es zweckmäßig, wenn eine integrierte Leistungsversorgung vorgesehen ist. Bei dieser Leistungsversorgung kann es sich um eine Batterie oder einen Akkumulator handeln, wobei der Akkumulator zweckmäßigerweise zum Laden mit einem Ladegerät über eine Kabelverbindung verbindbar ist. Das heißt, es sind entsprechende Anschlussmittel an der Steuerungseinrichtung vorgesehen.

Alternativ kann die zum Betrieb der Steuerungseinrichtung erforderliche Leistung über eine lösbare Kabelverbindung von einer externen Leistungsversorgung zuführbar sein. Bei dieser Kabelverbindung kann es sich entweder um ein Signalübertragungskabel zum Computer oder ein externes Netzteil handeln, das separat zum Computer positioniert ist, oder aber beispielsweise auch am Handgelenk getragen wird. Die Leistungsversorgung kann auch in einem Gehäuse mit einem Halteabschnitt angeordnet sein, welches als zweiter Ring am gleichen oder an einem benachbarten Finger oder dergleichen getragen wird, wobei zur Leistungsübertragung eine kurze Kabelverbindung dient.

Alternativ dazu besteht die Möglichkeit, dass zur Bereitstellung der benötigten Leistung und gegebenenfalls zum Aufladen eines Akkumulators einrichtungsseitig Solarzellen vorgesehen sind, die die benötigte Leistung liefern.

Die Signalübertragungseinrichtung und gegebenenfalls die Empfängereinrichtung können zweckmäßigerweise zur drahtlosen Signalübertragung, alternativ aber auch zur Übertragung über ein Signalkabel ausgebildet sein. Auf jeden Fall sind entsprechende Schnittstellen egal welcher Art am Gehäuse bzw. der Steuerungseinrichtung vorgesehen, über die die Steuerungssignale entweder drahtlos oder kabelgebunden an eine entsprechende Empfängerschnittstelle übertragen wird. Diese Empfängerschnittstelle kann entweder am Computer selbst sein, oder aber extern in einer Basisstation, die ihrerseits wiederum mit dem Computer kommuniziert. Die drahtlose Signalübertragung kann über Funksignale oder über IR-Signale erfolgen.

Aus energetischen Gesichtspunkten ist es zweckmäßig, wenn ein Ein-/Aus-Schalter zum Ein- bzw. Ausschalten der Einrichtung vorgesehen ist. Dies ermöglicht es dem Benutzer, die Einrichtung auch nur dann in Betrieb zu nehmen, wenn er sie wirklich benötigt. Dies hilft Energie zu sparen. Der Ein-/Aus-Schalter kann direkt am Gehäuse angeordnet sein, alternativ ist es auch denkbar, den Ein-/Aus-Betrieb der Einrichtung durch eine externe Signalgabe an die seitens der Steuerungseinrichtung vorgesehene integrierte Empfängereinrichtung zu steuern. In diesem Fall werden die für den Betrieb erforderlichen Ein-/Aus-Signale beispielsweise automatisch vom Computer gegeben, wenn dieser eingeschalten wird.

Nach einer ersten Erfindungsalternative können die Leistungsversorgung, die Mittel zum Erzeugen eines Signals bei Betätigung des Bewegungsaufnehmers oder des Schaltelements, die Signalübertragungseinrichtung, die Empfängereinrichtung und gegebenenfalls der Ein-/Aus-Schalter im Gehäuse integriert sein, das heißt, es ist lediglich ein Gehäuse vorhanden, in bzw. an dem sämtliche Funktionselemente sowie geeignete Schnittstellenanschlüsse (es können beliebige Schnittstellen wie z. B. PS/2, Com-Port, USB, serielle/parallele Schnittstellen vorgesehen sein) vorgesehen sind. Alternativ dazu kann zumindest ein Teil der genannten Einrichtungselemente in einem am Halteabschnitt an der dem ersten Gehäuse gegenüberliegenden Seite angeordneten zweiten Gehäuse angeordnet sein, an dem gegebenenfalls auch Anschlussmittel für ein Ladegerät vorgesehen sind, sofern sich die Leistungsversorgung in diesem Teil befindet. Selbstverständlich kommunizieren sämtliche im zweiten Gehäuse befindlichen Elemente mit denen im ersten Gehäuse, die Verteilung jedoch kann beliebig sein.

Befindet sich die Leistungsversorgung insbesondere in Form eines Akkumulators im zweiten Gehäuse, so ist es zweckmäßig, wenn dieses vom Halteabschnitt abnehmbar ist, so dass der Akkumulator im Gehäuse verbleiben kann und das Gehäuse mit einer Ladestation zum Laden des Akkumulators verbunden werden kann. Ein weiterer Vorteil ist die Möglichkeit, die zum Laden des Akkumulators oder zum Betrieb der Einrichtung vorhandenen Solarzellen am zweiten Gehäuse, das aufgrund seiner Positionierung am Halteabschnitt an der Fingeroberseite ist, anzuordnen. Dies stellt sicher, dass die Solarzellen kontinuierlich Licht empfangen und Energie liefern können.

Der Halteabschnitt kann nach einer ersten Erfindungsausgestaltung ein Klettband sein, das auf einfache Weise um den Finger gewickelt und geschlossen wird. Alternativ dazu kann der Halteabschnitt zwei zum Aufklemmen auf die Finger dienende Klemmarme umfassen, eine dritte Erfindungsalternative sieht vor, den Halteabschnitt als einteiligen Klemmabschnitt auszubilden. Eine weitere erfindungsgemäße Realisationsform sieht vor, dass der Halteabschnitt ein Halteband umfasst, an dem ein Rastabschnitt vorgesehen ist, in den das freie Ende des Haltebands einschieb- und verrastbar ist. Eine weitere Erfindungsalternative sieht schließlich vor, dass der bandartige Halteabschnitt mittels eines Magnetverschlusses schließbar ist. Besonders zweckmäßig ist es dabei, wenn der Halteabschnitt aus Metall ist oder eine Metallauflage aufweist und als Antenne zur drahtlosen Signalübertragung dient.

Weiterhin kann vorgesehen sein, dass das Gehäuse und gegebenenfalls das zweite Gehäuse zur Anpassung des Halteabschnitts an die Fingergröße am Halteabschnitt verschiebbar angeordnet sind.

Um bei einem starren ringförmigen Halteabschnitt eine Anpassung des Innendurchmessers zu ermöglichen kann in den Halteabschnitt ein Innenring eingesetzt werden, der dort zB. eingeclipst wird. Es können mehrere Innenringe unterschiedlichen Innendurchmessers vorgesehen sein, so dass eine beliebige Änderung möglich ist.

Weitere Vorteile, Merkmale und Einzelheiten der Erfindung ergeben sich aus den im Folgenden beschriebenen Ausführungsbeispielen sowie anhand der Zeichnung. Dabei zeigen:
- Fig. 1: eine perspektivische Ansicht einer erfindungsgemäßen Signalübertragungseinrichtung,
- Fig. 2: eine perspektivische Ansicht der Einrichtung aus Fig. 1 in anderer Ansicht,
- Fig. 3: eine Prinzipdarstellung betreffend die Betätigungsmöglichkeiten der Steuerungseinrichtung,
- Fig. 4: eine Prinzipskizze einer Steuerungseinrichtung zur Darstellung der relevanten Elemente, und
- Fig. 5: eine Perspektivansicht einer weiteren erfindungsgemäßen Steuerungseinrichtung.

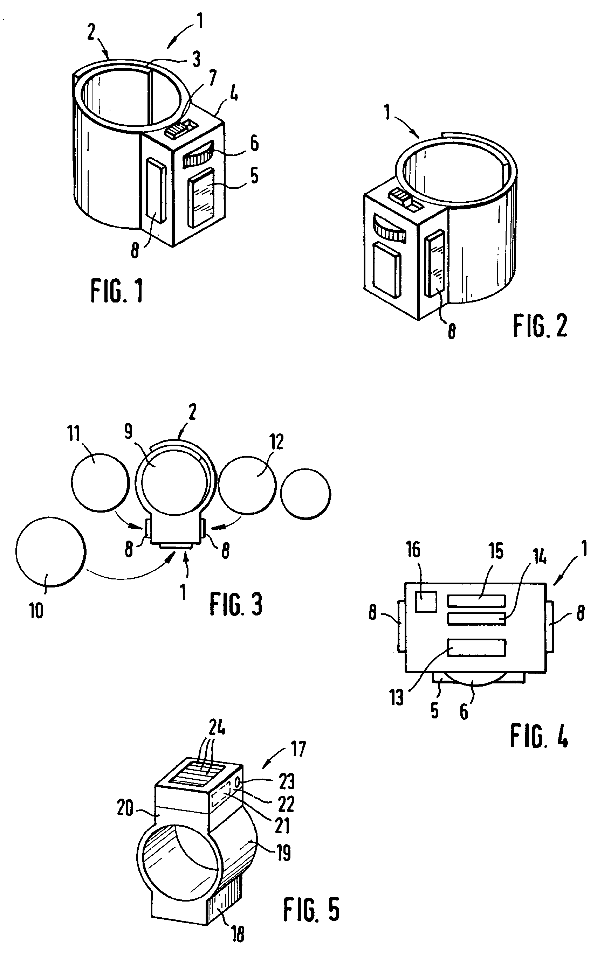

Fig. 1 zeigt eine erfindungsgemäße Steuerungseinrichtung 1 einer ersten Ausführungsform. Diese besteht aus einem Halteabschnitt 2, im gezeigten Beispiel einem Klettband 3, an dem ein Gehäuse 4 angeordnet ist. Das Gehäuse kann längs des Klettbands verschiebbar sein. Am Gehäuse 4 ist an seiner Unterseite ein Bewegungsaufnehmer 5 angeordnet, bei dem es sich um ein Touchpad, das zur Bewegungsaufnahme zu berühren ist, einen Joystick, einen Trackball oder aber auch um eine Minikamera, die die Bewegung des Daumens optisch erfasst, handeln kann. Gleichermaßen an der Gehäuseunterseite ist eine Einrichtung 6 zum Scrollen einer Monitorseite vorgesehen, bei der es sich im gezeigten Beispiel um ein Drehrad handelt, gleichermaßen kann aber auch ein Schiebeschalter oder zwei mit unterschiedlichen Bewegungsrichtungsinformationen belegbare Tasten oder dergleichen zum Einsatz kommen. An der Gehäusestirnseite ist weiterhin ein Ein/Aus-Schalter 7 angeordnet, über den die Betriebsbereitschaft eingestellt werden kann.

An den seitlichen Gehäuseabschnitten sind einander gegenüberliegend zwei Schaltelemente 8 vorgesehen, die wie auch der Bewegungsaufnehmer 5 über benachbarte Finger betätigt werden können. Diese Schaltelemente können auch an den seitlichen Abschnitten des Halteabschnitts angeordnet sein. Sie können dort verschiebbar sein, um ihre Lage den Anforderungen entsprechend wählen zu können. Auch kann das Gehäuse seitlich nach oben gezogen sein, d.h., es sind zwei seitliche verlängernde Gehäuseabschnitte vorgesehen, die sich entlang eines Teils des Halteabschnitts erstrecken, und an denen die Schaltelemente angeordnet sein können.

Dies ist in einer Prinzipskizze in Fig. 3 gezeigt. Die Steuerungseinrichtung 1 ist am Mittelfinger 9 mittels des Halteabschnitts 2 befestigt. Über den Daumen 10 kann der Bewegungsaufnehmer 5, der zum Handinneren positioniert ist, problemlos von unten betätigt werden, gleich welcher Ausgestaltung der Bewegungsaufnehmer ist. Der Zeigefinger 11 dient zum Betätigen des linken Schaltelements 8, während der Ringfinger 12 zur Betätigung des rechten Schaltelements dient. Auf diese Weise ist es problemlos möglich, z. B. gleichzeitig das linke Schaltelement 8 und den Bewegungsaufnehmer 5 zu betätigen.

Fig. 4 zeigt eine Prinzipskizze der erfindungsgemäßen Steuerungseinrichtung 1 zur Darstellung der zentralen Elemente. Im Gehäuseinneren ist eine Signalerzeugungseinrichtung 13 vorgesehen, in der die entsprechenden, bei Betätigung des Bewegungsaufnehmers 5, der Einrichtung zum Scrollen 6 oder eines der Schaltelemente 8 erzeugt werden. Über die Signalübertragungseinrichtung 14 werden die erzeugten Signale an einen externen Empfänger, der z. B. in einem Computer integriert ist, übertragen. Die Signalübertragungseinrichtung 14 kann die Signale per Funk übertragen, gleichermaßen ist auch eine kabelgebundene Datenübertragung möglich, wozu am Gehäuse entsprechende nicht näher gezeigte Anschlussmittel vorgesehen sind. Die Signalübertragung kann über eine beliebige nicht dargestellte gehäuseseitige Schnittstelle erfolgen, am Empfänger ist eine entsprechende Schnittstelle vorgesehen.

Weiterhin ist im gezeigten Beispiel eine Empfängereinrichtung 15 im Gehäuse integriert. Diese Empfängereinrichtung 15 dient zum Empfang von Signalen, die der Computer über eine geeignete Sendeeinrichtung an die Steuerungseinrichtung 1 sendet. Diese dienen beispielsweise zum Ein-/Ausschalten der Steuerungseinrichtung, sofern dies nicht über einen Schalter erfolgt, sondern vom Computer gesteuert wird.

Schließlich ist noch eine integrierte Leistungsversorgung 16 vorgesehen, bei der es sich um eine Batterie oder um einen Akkumulator handeln kann.

Fig. 5 zeigt eine zweite erfindungsgemäße Ausführungsform einer Steuerungseinrichtung 17. Diese besteht aus einem ersten Gehäuse 18 und einem an der gegenüberliegenden Seite des Halteabschnitts 19 angeordneten zweiten Gehäuse 20. Im zweiten Gehäuse 20 ist im gezeigten Ausführungsbeispiel z. B. der Akkumulator 21 angeordnet. Der obere Teil 22 des zweiten Gehäuses 20 ist abnehmbar. Dies ermöglicht es, den Akkumulator in ein Ladegerät einzusetzen, wo der obere Gehäuseteil 22 z. B. über den Anschluss 23 mit dem Ladegerät kontaktiert wird. Gleichermaßen ist über den Anschluss 23 auch eine externe Leistungszufuhr möglich, wozu lediglich ein Kabel, das von einer Leistungsquelle kommt, am Anschluss 23 angeschlossen werden muss.

Ferner sind auf dem oberen Gehäuseteil 22 Solarzellen 24 angeordnet, die ebenfalls zur Leistungserzeugung dienen und über die entweder der Akkumulator während des Betriebs aufgeladen werden kann, oder die generell zur Leistungsversorgung dienen, sofern der von ihnen gelieferte Strom hinreichend ist.

Festzuhalten ist, dass die Verteilung der in Fig. 4 beschriebenen Elemente auf die beiden Gehäuse 18, 20 beliebig ist. So ist es selbstverständlich auch denkbar, die Empfängereinrichtung im Gehäuse 22 anzuordnen etc.

Abschließend ist darauf hinzuweisen, dass die Ausbildung des Halteabschnitts beliebig ist. Dieser kann alternativ als Klemmabschnitt ausgebildet sein, auch eine Ausführung als geschlossener Ring ist denkbar.

Insgesamt bietet die erfindungsgemäße Steuerungseinrichtung die Möglichkeit, eine Vielzahl von Steuersignalen durch einfaches oder gleichzeitiges Betätigen unterschiedlicher Betätigungselemente zu erzeugen. Die Steuerungseinrichtung kann die bekannte Maus vollkommen ersetzen, ein lästiges Verlassen der Tastatur wird vorteilhaft vermieden. Die Genauigkeit, die Empfindlichkeit der Bewegungsaufnahme sowie die Tastenbelegung kann über entsprechende Software computerseitig eingestellt werden.

Denkbar ist darüber hinaus die Kombination z. B. zweier Ringe, die an jeweils eine Hand gesteckt werden. Diese Einsatzmöglichkeit ist z. B. für Computerspiele oder dergleichen zweckmäßig.

## Patentansprüche

1. Steuerungseinrichtung zum Ausgeben von Steuersignalen an einen Empfänger, insbesondere einen Computer, umfassend einen Halteabschnitt zum Befestigen der Steuerungseinrichtung an einem Finger, mit einem an dem Halteabschnitt angeordneten Gehäuse, an dem ein mittels eines anderen Fingers bewegbarer Bewegungsaufnehmer vorgesehen ist, sowie mit einem mittels eines Fingers betätigbaren Schaltelement, wobei in Abhängigkeit der Bewegung des Bewegungsaufnehmers und der Betätigung des Schaltelements Steuersignale erzeugt und über eine Signalübertragungseinrichtung ausgegeben werden, **dadurch gekennzeichnet, dass** der Bewegungsaufnehmer (5) und das wenigstens eine am Gehäuse (4) oder dem Halteabschnitt (3) angeordnete Schaltelement (8) am Gehäuse (4) derart versetzt zueinander angeordnet sind, dass der Bewegungsaufnehmer (5) mit dem Daumen (10) und das Schaltelement (8) mit einem dem Finger (9), auf den die Steuerungseinrichtung (1) aufgesteckt ist, benachbarten Finger (11, 12) betätigbar ist.

2. Steuerungseinrichtung nach Anspruch 1, **dadurch gekennzeichnet, dass** der Bewegungsaufnehmer (5) an einem unteren Gehäuseabschnitt und das wenigstens eine Schaltelement (8) an einem seitlichen Gehäuseabschnitt oder einem seitlichen Abschnitt des Halteabschnitts um vorzugsweise ca. 90° versetzt angeordnet ist.

3. Steuerungseinrichtung nach Anspruch 2, **dadurch gekennzeichnet, dass** an zwei einander gegenüberliegenden seitlichen Gehäuseabschnitten oder Abschnitten des Halteabschnitts jeweils mindestens ein Schaltelement (8) angeordnet ist.

4. Steuerungseinrichtung nach Anspruch 1, **dadurch gekennzeichnet, dass** der Bewegungsaufnehmer an einem seitlichen Gehäuseabschnitt und das mindestens eine Schaltelement an einem gegenüberliegenden seitlichen Gehäuseabschnitt oder Abschnitt des Halteabschnitts angeordnet ist.

5. Steuerungseinrichtung nach einem der vorangehenden Ansprüche, **dadurch gekennzeichnet, dass** der Bewegungsaufnehmer (5) ein Trackball, ein Joystick, ein Touchpad, eine Minikamera oder eine optische Einrichtung ist, über die eine Unterlage unter der Steuerungseinrichtung in Form einzelner Bilder aufgenommen und durch Analyse der Bilder die Bewegung ermittelt wird.

6. Steuerungseinrichtung nach einem der vorangehenden Ansprüche, **dadurch gekennzeichnet, dass** eine gehäuseseitig und benachbart zum Bewegungsaufnehmer (5) angeordnete, mit dem Daumen (10) betätigbare Einrichtung (6) zum Scrollen einer Monitorseite vorgesehen ist.

7. Steuerungseinrichtung nach Anspruch 6, **dadurch gekennzeichnet, dass** die Einrichtung (6) zwei mit unterschiedlichen Bewegungsrichtungsinformationen belegbare Tasten, einen Schiebeschalter, ein Drehrad oder eine Drehwalze umfasst.

8. Steuerungseinrichtung nach einem der vorangehenden Ansprüche, **dadurch gekennzeichnet, dass** eine integrierte Leistungsversorgung (16) vorgesehen ist.

9. Steuerungseinrichtung nach Anspruch 8, **dadurch gekennzeichnet, dass** die Leistungsversorgung (16) eine Batterie oder ein Akkumulator ist.

10. Steuerungseinrichtung nach Anspruch 9, **dadurch gekennzeichnet, dass** sie zum Laden des Akkumulators mit einem Ladegerät verbindbar ist.

11. Steuerungseinrichtung nach einem der Ansprüche 1 bis 7, **dadurch gekennzeichnet, dass** die zum Betrieb der Steuerungseinrichtung (1, 17) erforderliche Leistung über eine lösbare Kabelverbindung von einer externen Leistungsversorgung zuführbar ist.

12. Steuerungseinrichtung nach einem der Ansprüche 1 bis 9, **dadurch gekennzeichnet, dass** zur Bereitstellung der benötigten Leistung und gegebenenfalls zum Aufladen eines Akkumulators einrichtungsseitig Solarzellen (24) vorgesehen sind.

13. Steuerungseinrichtung nach einem der vorangehenden Ansprüche, **dadurch gekennzeichnet, dass** die Signalübertragungseinrichtung (14) und gegebenenfalls die Empfängereinrichtung (15) zur drahtlosen Signalübertragung oder zur Übertragung über ein Signalkabel ausgebildet ist.

14. Steuerungseinrichtung nach einem der vorangehenden Ansprüche, **dadurch gekennzeichnet, dass** ein Ein-/Aus-Schalter (7) zum Ein- bzw. Ausschalten der Einrichtung (1, 17) vorgesehen ist.

15. Steuerungseinrichtung nach einem der vorangehenden Ansprüche, **dadurch gekennzeichnet, dass** der Ein-/Aus-Betrieb der Einrichtung (1, 17) durch eine externe Signalgabe an die integrierte Empfängereinrichtung (15) steuerbar ist.

16. Steuerungseinrichtung nach einem der vorangehenden Ansprüche, **dadurch gekennzeichnet, dass** die Leistungsversorgung (16), die Mittel (13) zum Erzeugen eines Signals bei Betätigung des Bewegungsaufnehmers (5) oder des Schaltelements (8), die Signalübertragungseinrichtung (14), die Empfängereinrichtung (15) und gegebenenfalls der Ein-/Aus-Schalter (7) im Gehäuse (18) integriert oder zumindest zum Teil in einem am Halteabschnitt (19) an der dem ersten Gehäuse (18) gegenüberliegenden Seite angeordneten zweiten Gehäuse (20) angeordnet sind, an dem gegebenenfalls auch Anschlußmittel für ein Ladegerät vorgesehen sind.

17. Steuerungseinrichtung nach Anspruch 16, **dadurch gekennzeichnet, dass** das zweite Gehäuse (20) oder ein Teil (22) davon vom Halteabschnitt (19) abnehmbar ist.

18. Steuerungseinrichtung nach Anspruch 16 oder 17, **dadurch gekennzeichnet, dass** die Solarzellen (24) am zweiten Gehäuse (20) angeordnet sind.

19. Steuerungseinrichtung nach Anspruch 18, **dadurch gekennzeichnet, dass** das zweite Gehäuse oder sein oberer Teil eine pyramidenartige Form aufweist.

20. Steuerungseinrichtung nach einem der vorangehenden Ansprüche, **dadurch gekennzeichnet, dass** der Halteabschnitt (1, 19) ein Klettband ist.

21. Steuerungseinrichtung nach einem der Ansprüche 1 bis 19, **dadurch gekennzeichnet, dass** der Halteabschnitt (1, 19) zwei zum Aufklemmen auf dem Finger dienende Klemmarme umfasst.

22. Steuerungseinrichtung nach einem der Ansprüche 1 bis 19, **dadurch gekennzeichnet, dass** der Halteabschnitt (1, 19) ein einteiliger Klemmabschnitt ist.

23. Steuerungseinrichtung nach einem der Ansprüche 1 bis 19, **dadurch gekennzeichnet, dass** der Halteabschnitt (1, 19) ein Halteband umfasst, an dem ein Rastabschnitt vorgesehen ist, in den das freie Ende des Haltebands einschieb- und verrastbar ist.

24. Steuerungseinrichtung nach einem der Ansprüche 1 bis 19, **dadurch gekennzeichnet, dass** der bandartige Halteabschnitt (1, 19) mittels eines Magnetverschlusses schließbar ist.

25. Steuerungseinrichtung nach einem der vorangehenden Ansprüche, **dadurch gekennzeichnet, dass** der Halteabschnitt (1, 19) aus Metall ist oder eine Metalleinlage aufweist und als Antenne zur drahtlosen Signalübertragung dient.

26. Steuerungseinrichtung nach einem der vorangehenden Ansprüche, **dadurch gekennzeichnet, dass** das Gehäuse (4) und gegebenenfalls das zweite Gehäuse (20) verschiebbar am Halteabschnitt (1, 19) angeordnet sind.

27. Steuerungseinrichtung nach einem der Ansprüche 1 bis 19, **dadurch gekennzeichnet, dass** zur Verkleinerung des Innendurchmessers eines starren ringförmigen Halteabschnitts ein Innenring in den Halteabschnitt einsetzbar ist.
